# DEMANDE DE BREVET EUROPEEN

(11) **EP 4 611 372 A1**
(43) Date de publication de la demande: **03.09.2025**
(21) Numéro de dépôt: 25160142.3
(22) Date de dépôt: 26.02.2025
(51) Int. Cl.: H04N 21/214, H04N 21/222, H04N 21/231, H04N 21/845

(54) **PRÉ-CACHING MODULÉ DE CONTENUS MÉDIA DANS UN ENVIRONNEMENT MOBILE**

(30) Priorité: 01.03.2024 FR 2402083
(71) Demandeur: Groupe Canal +, 92863 ISSY-LES-MOULINEAUX CEDEX 9 (FR)
(72) Inventeur: NAUD, Pierre-Louis, 92863 ISSY-LES-MOULINEAUX (FR)
(74) Mandataire: Casalonga

(57) **Abrégé**

Un système de streaming (100) externe accédé depuis un environnement mobile (150), tel un train, présente les inconvénients d'un espace de stockage (1522) trop limité pour mettre en cache une part importante d'un catalogue imposant de contenus, et d'une liaison de communication non fiable vers un CDN externe (110) pour permettre une lecture sans coupure dès le début des contenus. Un serveur de cache (152) permettant de pré-mettre en cache une portion de début seulement d'un ou plusieurs contenus média sera bénéfique. Des scores associés aux contenus sont obtenus pour choisir la ou les qualités du contenu à pré-mettre en cache et pour quantifier la longueur de leurs portions de début. La bande passante de la liaison, l'espace de stockage disponible en cache, des préférences ou historiques utilisateurs, des horaires d'un trajet du train sont pris en compte. Les portions de début sont pré-cachées par chargement progressif simultané.

## Description

### Domaine de l'invention

La présente invention concerne le domaine de la diffusion continue ou « streaming » de contenus, typiquement multimédia.

### Techniques antérieures

Le streaming est utilisé pour visionner ou écouter des contenus média en ligne, sans avoir à télécharger de fichier dans le dispositif de restitution.

Le streaming fonctionne entre deux parties : d'un côté, un client équipé d'un lecteur de contenu au niveau d'un dispositif de restitution d'un utilisateur final et, de l'autre, un serveur (ou plusieurs serveurs) qui met à disposition les contenus média.

Dans un service de streaming, il est classique d'avoir un ou plusieurs réseaux de diffusion de contenus (ou CDN pour « *Content Delivery Network* ») formés de serveurs de contenus mettant à disposition les contenus sous forme de flux unicast. Les contenus disponibles sont décrits dans des fichiers (manifest) descriptifs, dont les appellations varient d'une technologie à l'autre, par exemple « master playlist », « media playlist » ou « manifest » en HLS (« HTTP Live Streaming » d'Apple - nom commercial) ou « MPD » (pour « Media Presentation Description ») en MPEG-DASH. Les utilisateurs finaux, typiquement les lecteurs de contenu, peuvent alors accéder à ces contenus par segments successifs via des requêtes HTTPs unicast, c'est-à-dire HTTP sécurisé, aux adresses URL (pour « Uniform Resource Locator » soit localisateur uniforme de ressource) indiquées dans ces fichiers.

Un même contenu média est classiquement proposé, dans un fichier descriptif, selon plusieurs qualités (par exemple résolutions, niveaux de compression ou débit correspondant, fréquences d'images, sous-titres, audio, options d'accessibilités pour les personnes avec déficience auditive et/ou visuelle, etc.) au choix du lecteur de contenu qui « s'adapte » de façon dynamique en basculant, si nécessaire, d'une qualité à l'autre. Aussi, le streaming vidéo hybride est-il dit « adaptatif ». Chaque qualité est décrite dans le fichier descriptif sous une piste différente. Le terme « piste » est ainsi utilisé comme synonyme de qualité pour un contenu donné.

Il va de soi qu'un service de streaming n'est efficace que si la liaison de communication entre le client et le serveur est maintenue de bonne qualité pendant l'ensemble de la diffusion en continu. Aussi, si la qualité de la liaison diminue, le lecteur de contenu est enclin à basculer sur une piste de qualité moindre telle que proposée dans le fichier descriptif.

Un domaine dans lequel les liaisons de communication fluctuent fréquemment dans le temps concerne les transports. En effet, un véhicule, lorsqu'il se déplace, peut traverser des zones non couvertes par un réseau de communication ou s'éloigner temporairement de stations de bases diminuant la qualité de la communication. A l'inverse, il peut également récupérer une liaison de meilleure qualité à d'autres moments. L'expérience de streaming dans de tels véhicules peut alors se dégrader subitement.

De même, dans le domaine aérien, si la liaison de communication est plutôt stable une fois le vol stabilisé, sa bande passante est extrêmement réduite du fait du partage d'une liaison par satellite avec plusieurs avions.

La présence d'un (ou plusieurs) serveur de cache embarqué dans ces véhicules peut améliorer cette situation.

En effet, un tel serveur de cache embarqué, ou « proxy », permet de stocker en avance localement certains contenus et de délivrer ceux-ci directement à tout utilisateur local les sollicitant, sans avoir à se connecter aux CDN externes via la liaison de communication avec l'extérieur. Ce stockage en avance est également connu sous l'appellation de « pré-caching » ou « pré-mise en mémoire cache » signifiant une mise en mémoire cache préalablement à toute demande de contenu concerné.

Les contraintes principales de tels systèmes concernent la capacité limitée de la mémoire du serveur de cache embarqué pour stocker les contenus, ainsi que la bande passante fluctuante de la liaison de communication pouvant rendre difficile la récupération de contenus non pré-cachés dans le serveur de cache.

La demande WO2020223607 propose des serveurs (« capacitors ») dans les gares qui pré-cachent des contenus afin d'offrir une meilleure réactivité au chargement de ceux-ci dans les trains ou autres véhicules. Des contenus, par exemple priorisés selon leur popularité ou taille, sont ensuite chargés dans les serveurs de cache embarqué d'un train lorsque ce dernier est en gare. Cette solution optimise ainsi les chances qu'un contenu demandé par un utilisateur embarqué corresponde à un contenu pré-caché, c'est-à-dire préchargé dans le serveur embarqué.

Cette solution n'est cependant pas entièrement satisfaisante.

Notamment, elle est adaptée pour un catalogue restreint et stable de contenus type « à la demande » (ou VOD pour « video on demand ») compte tenu de la capacité mémoire limitée du serveur de cache embarqué.

Son adaptation à un catalogue étendu nécessiterait une taille de cache local considérable stockant des contenus jamais lus, ou l'utilisation fréquente de la liaison de communication, non fiable, pour récupérer des contenus entiers non-précachés lorsqu'ils sont sollicités par un utilisateur. Or la lecture hors cache dégrade nécessairement l'expérience utilisateur (lancement long d'un contenu, risque de coupure en cours de lecture).

En outre, son adaptation à un catalogue renouvelé fréquemment nécessiterait le chargement d'une quantité importante de données (contenus), parfois non compatible avec le temps disponible en gare.

Il existe donc le besoin d'un système amélioré de streaming qui puisse mieux utiliser l'espace mémoire embarqué disponible dans une optique écologique, et offrir une expérience utilisateur satisfaisante tout en facilitant le renouvellement de toute partie du catalogue.

### Exposé de l'invention

Constatant les limitations des techniques connues, les inventeurs proposent un système pilotant le pré-caching des contenus avec plus de progressivité et plus de finesse afin de stocker et transmettre une quantité raisonnable de données et d'assurer une lecture fiable sur un nombre important de contenus.

Dans ce dessein, un système de streaming de contenus média est proposé, comprenant un environnement mobile doté d'un serveur de cache dans lequel sont pré-mises en mémoire cache des données de contenus média disponibles auprès d'un serveur de diffusion unicast de contenus externe à l'environnement mobile. Le serveur de cache est configuré pour pré-mettre en mémoire cache une portion de début seulement d'un ou plusieurs contenus média.

On entend par « portion de début » l'ensemble des données média qui compose le début du contenu média concerné (par exemple film), typiquement le premier segment média et les suivants (et non l'intégralité). Une portion ou partie de début d'un contenu média est une sous-partie de ce dernier, signifiant qu'un ou plusieurs segments média ne sont pas pré-chargés en mémoire cache.

En ne préchargeant que le début de contenus média, un plus grand nombre de contenus peut être pré-caché partiellement, améliorant ainsi l'expérience utilisateur moyenne lors du lancement de la lecture de contenus. Par ailleurs, la quantité de données à charger lors d'un renouvellement partiel du catalogue est réduite, limitée aux portions de début des nouveaux contenus à précharger.

Corrélativement, il est également proposé un procédé de streaming de contenus média dans un environnement mobile, comprenant une étape de pré-mise en mémoire cache, dans un serveur de cache de l'environnement mobile, de données de contenus média disponibles auprès d'un serveur de diffusion unicast de contenus externe à l'environnement mobile, procédé dans lequel la pré-mise en mémoire cache comprend la pré-mise en mémoire cache d'une portion de début seulement d'un ou plusieurs contenus média.

Des caractéristiques facultatives des modes de réalisation de l'invention sont définies dans les revendications annexées. Certaines de ces caractéristiques sont expliquées ci-dessous en référence à un système, tandis qu'elles peuvent être transposées en caractéristiques de procédé.

Dans un mode de réalisation, un gestionnaire de pré-caching est configuré pour obtenir des scores associés à des contenus média respectifs et pour contrôler la pré-mise en mémoire cache d'une portion de début de chaque contenu média et dont une longueur est fonction du score associé. Des priorités peuvent être mises sur les contenus média, par exemple fonction de la popularité du contenu média ou d'un souhait éditorial de le mettre en avant.

La portion de début pré-mise en mémoire cache pour un contenu média peut ainsi être d'autant plus importante que le score associé au contenu est élevé. Un pré-caching partiel et modulé des contenus média est ainsi mis en place.

En outre, aucun pré-caching peut être opéré en cas de score trop faible (inférieur à un seuil bas), alors que l'entièreté du contenu média peut être pré-caché en cas de score très élevé (supérieur à un seuil haut).

La relation mathématique entre le score (typiquement entre les deux seuils) et la longueur de la portion de début à pré-mettre en mémoire cache peut être convexe. Ainsi,

Selon une caractéristique, la longueur de la portion de début d'un contenu média pré-mise en mémoire cache correspond à un pourcentage dudit contenu média, déterminé en fonction du score associé.

En variante ou en combinaison, la longueur de la portion de début d'un contenu média pré-mise en mémoire cache correspond à une durée dudit contenu média, déterminée en fonction du score associé. Il est ainsi possible de garantir une durée minimale de lecture des contenus média sans coupure.

Dans un mode de réalisation, une longueur de la portion de début d'un contenu média pré-mise en mémoire cache est fonction d'une estimation d'une bande passante disponible sur une liaison de communication entre l'environnement mobile et le serveur externe de diffusion unicast de contenus. Cela permet d'optimiser la partie pré-mise en cache de sorte à minimiser les risques que la lecture du contenu ne rattrape la fin du cache. En effet, comme décrit pas la suite, le lancement de la lecture du contenu peut déclencher la mise en cache des portions (segments média) manquants. La portion de début pré-mise en cache est dimensionnée pour que la lecture ne rattrape pas les segments média en cours de récupération. La bande passante disponible peut être une sous-partie de la bande passante totale disponible sur la liaison de communication, sous-partie affectée au contenu ou à un pool de contenus média partiellement pré-caché.

Dans un mode de réalisation, un contenu média est disponible dans une pluralité de qualités, et le gestionnaire de pré-caching est configuré pour déterminer, en fonction du score associé au contenu média, une ou plusieurs desdites qualités pour lesquelles une portion de début est pré-mise en mémoire cache. Cette disposition permet d'améliorer l'expérience utilisateur en prévoyant par exemple de pré-charger des segments vidéo de la qualité élevée en cas de forte probabilité (score) que les utilisateurs de l'environnement mobile consomment le contenu média. Elle permet également de réduire le gaspillage d'espace mémoire dans le cache en prévoyant par exemple de ne pré-charger des segments vidéo que de la qualité la plus basse en cas de faible probabilité (score) de visionnage dans l'environnement mobile.

Selon une caractéristique, une longueur de la portion de début d'une qualité pré-mise en mémoire cache est fonction du débit de la qualité et du score associé. En effet, plus une piste est de qualité élevée (donc avec un débit élevé), plus il apparaît utile de pré-mettre en cache une partie plus importante de la piste, car une lecture sans coupure jusqu'à la fin du contenu est plus complexe à garantir. Réciproquement, avec un débit faible, il est plus aisé de récupérer les segments vidéo manquants via la liaison de communication.

Dans un mode de réalisation, une longueur de la portion de début d'un contenu média pré-mise en mémoire cache est fonction d'un espace de stockage disponible en mémoire cache. Cet espace peut être partagé par l'ensemble des contenus à pré-cacher.

Dans un mode de réalisation, une longueur de la portion de début d'un contenu média pré-mise en mémoire cache est fonction d'utilisateurs de l'environnement mobile entre deux sessions de synchronisation de la mémoire cache selon deux plans distincts de pré-mise en mémoire cache de contenus média.

Dans un mode de réalisation, les scores associés aux contenus média sont fonction d'utilisateurs de l'environnement mobile entre deux sessions de synchronisation de la mémoire cache selon deux plans distincts de pré-mise en mémoire cache de contenus média.

Ces personnalisations du pré-caching améliorent la consommation des contenus média pré-cachés entre les deux sessions de synchronisation, typiquement un voyage ou trajet d'un véhicule, et donc réduit le gaspillage d'espace mémoire dans le cache. Par exemple, des sessions de synchronisation peuvent être prévues à chaque gare empruntée par un train afin d'ajuster les contenus pré-cachés aux voyageurs montant et descendant. En variante, les sessions de synchronisation peuvent être prévues uniquement aux gares de départ et d'arrivée.

A titre illustratif, un score élevé peut être attribué aux épisodes suivant un épisode consommé dernièrement par un ou plusieurs voyageurs.

A titre illustratif toujours, la portion de début d'un contenu média à pré-cacher peut être étendue au-delà d'une dernière position de lecture du contenu par un ou plusieurs voyageurs, leur permettant ainsi de poursuivre leur lecture sans coupure.

Dans un mode de réalisation, les scores associés aux contenus média sont fonction d'un horaire entre deux sessions de synchronisation de la mémoire cache selon deux plans distincts de pré-mise en mémoire cache de contenus média. Les contenus pré-cachés sont ainsi fonction de l'horaire du voyage concerné, permettant de prioriser les contenus généralement consommés à cette heure-là par rapport aux autres contenus média.

Dans un mode de réalisation, le serveur de cache est configuré pour obtenir une liste ordonnée de segments média composant les portions de début selon des priorités attribuées aux segments média, et pour pré-mettre en mémoire cache les segments média par priorité décroissante. Cette disposition permet de garantir qu'en cas de synchronisation incomplète, les segments média les plus prioritaires (donc a priori les plus susceptibles d'être consommés) sont accessibles aux utilisateurs, et de ce fait améliorer l'expérience utilisateur.

Dans un mode de réalisation, le serveur de cache est configuré pour pré-mettre en mémoire cache des portions de début d'une pluralité de contenus média par chargement progressif simultané de leurs portions de début. Cette disposition assure la pré-mise en cache des premiers segments vidéo de tous les contenus média considérés. Aussi, même en cas de synchronisation incomplète de la mémoire cache avant le départ du train, les voyageurs sont en mesure de commencer la lecture de ces contenus.

Dans un mode de réalisation, le serveur de cache est configuré pour pré-mettre en mémoire cache des portions de début d'une pluralité de contenus média en priorisant une portion de début d'une qualité faible d'un contenu média sur une portion de début d'une qualité élevée du même contenu média. Cette disposition maximise la compatibilité du contenu avec les différents lecteurs embarqués dans l'environnement mobile, même en cas de synchronisation incomplète de la mémoire cache avant le départ du train.

Dans un mode de réalisation, le serveur de cache est configuré pour charger, via une liaison de communication entre l'environnement mobile et le serveur externe de diffusion unicast de contenus, des parties manquantes d'un contenu média, en réponse au lancement de la lecture du contenu média dans l'environnement mobile. Le début du chargement peut être immédiat ou être légèrement différé (pendant une durée de confirmation) en attente d'une confirmation que la lecture se poursuit.

Selon une caractéristique, les parties manquantes du contenu média incluent des segments média manquants d'une qualité en cours de lecture et des segments média d'au moins une autre qualité du même contenu média.

Bien entendu, il est possible que les segments média manquants de la seule qualité en cours de lecture soient chargés.

Les modes de réalisation décrits ci-dessus peuvent être combinés, sauf exclusion expresse.

La présente invention vise également un programme informatique comportant des instructions pour la mise en oeuvre du procédé ci-dessus, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

L'invention vise également un support d'enregistrement non transitoire lisible par un ordinateur sur lequel est enregistré un programme pour la mise en oeuvre du procédé ci-dessus, lorsque ce programme est exécuté par un processeur.

Au moins une partie des procédés selon l'invention peut être mise en oeuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "circuit", "module" ou "système". De plus, la présente invention peut prendre la forme d'un produit de programme informatique incorporé dans tout support d'expression tangible disposant d'un code de programme utilisable par ordinateur incorporé dans le support.

Étant donné que la présente invention peut être mise en oeuvre dans un logiciel, la présente invention peut être incorporée sous forme de code lisible par ordinateur pour être fournie à un appareil programmable sur tout support adapté. Un support tangible ou non transitoire peut comprendre un support de stockage tel qu'un lecteur de disque dur, un dispositif de bande magnétique ou un dispositif de mémoire à semi-conducteurs et analogues. Un support transitoire peut comporter un signal tel qu'un signal électrique, un signal électronique, un signal optique, un signal acoustique, un signal magnétique ou un signal électromagnétique, par exemple un signal hyperfréquence ou RF (radiofréquence).

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :
[Fig. 1] représente schématiquement un exemple de système de streaming vidéo adaptatif ;
[Fig. 2] illustre un exemple de fichier manifest descriptif ou « manifest » racine pour un contenu média ;
[Fig. 3] illustre schématiquement une mémoire cache d'un serveur de cache embarqué dans un environnement mobile ;
[Fig. 4] illustre de multiples sessions de synchronisation de pré-caching dans le temps pour un même environnement mobile ;
[Fig. 5] illustre, à l'aide d'un ordinogramme, des étapes d'un procédé de pré-caching selon des modes de réalisation ;
[Fig. 6] illustre un exemple de relation mathématique entre score affecté à un contenu média et longueur de la portion de début à pré-cacher, selon des modes de réalisation ;
[Fig. 7] illustre, à l'aide d'un ordinogramme, des étapes d'un procédé de streaming par un serveur de cache selon des modes de réalisation ; et
[Fig. 8] représente une variante de système de streaming vidéo adaptatif.

### Description détaillée

Un système de streaming externe accédé depuis un environnement mobile, tel un train, présente les inconvénients d'un espace de stockage trop limité pour mettre en cache une part importante d'un catalogue imposant de contenus, et d'une liaison de communication non fiable vers un CDN externe pour permettre une lecture sans coupure dès le début des contenus. Un serveur de cache permettant de pré-mettre en cache une portion de début seulement d'un ou plusieurs contenus média sera bénéfique. Des scores associés aux contenus sont obtenus pour choisir la ou les qualités du contenu à pré-mettre en cache et pour quantifier la longueur de leurs portions de début. La bande passante de la liaison, l'espace de stockage disponible en cache, des préférences ou historiques utilisateurs, des horaires d'un trajet du train sont pris en compte. Les portions de début sont pré-cachées par chargement progressif simultané.

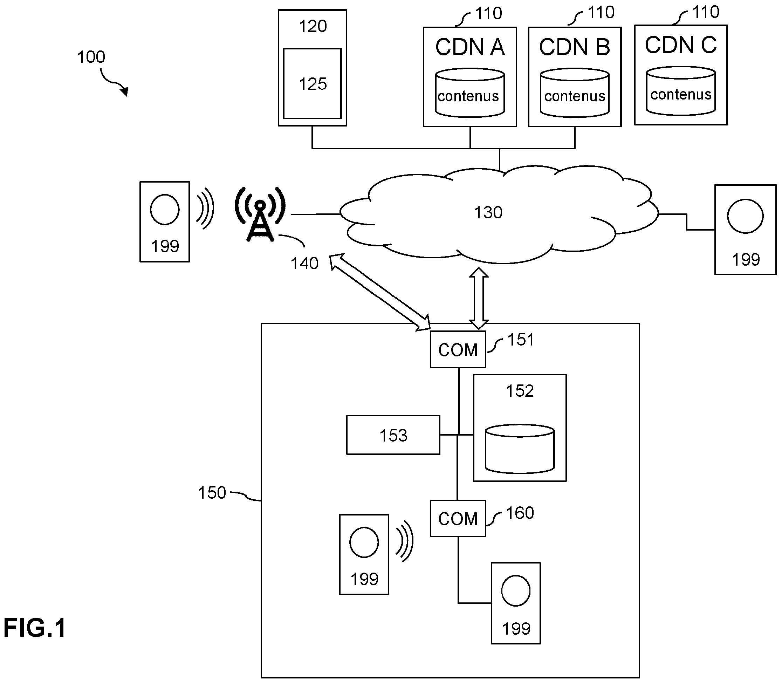

La **Figure 1** illustre un système de streaming (ou « diffusion continue ») adaptatif 100 de contenus média, tels de la vidéo à la demande (VOD). Seuls les équipements et fonctions utiles aux explications ci-dessous sont illustrés, pour simplifier les explications. Néanmoins, l'homme de l'art reconnaitra les équipements ou fonctions additionnelles qui sont classiquement utilisés pour le fonctionnement d'un système de streaming.

La représentation des équipements et fonctions est purement schématique. Un bloc ou module illustré peut être mis en oeuvre au sein d'un ou plusieurs équipements physiques (type serveurs). De même, deux ou plusieurs blocs/modules illustrés peuvent être mis en oeuvre au sein d'un même équipement physique.

Le système 100 comprend de façon classique un ou plusieurs réseaux publics de diffusion unicast de contenus ou « CDN » 110, un ou plusieurs serveurs de manifest 120, un réseau de communication 130 auquel sont connectés les serveurs 110, 120 et auquel peuvent se connecter des terminaux clients dotés de lecteurs de contenus 199, et un réseau alternatif de communication par exemple un réseau de téléphonie mobile 140 interfaçant certains terminaux client avec le réseau 130.

Un CDN 110 comporte un ou plusieurs serveurs pour le stockage de contenus multimédia dans un format permettant leur diffusion en continu (streaming). Un contenu multimédia peut correspondre à un film, un documentaire, un épisode de série, un événement en direct (sportif ou non), etc.

Typiquement, un contenu média initial est encodé selon des résolutions ou qualités différentes, par exemple en une version 4K ou ultra haute définition (UHD), une version Full HD (FHD), une version haute définition (HD) et une version basse définition (SD). Bien entendu, un nombre différent de versions peut être produit ainsi que d'autres définitions ou formats (ex : HDR, HFR, etc.). De façon similaire à ces exemples de qualités vidéo différentes, des qualités différentes peuvent être proposées pour des pistes audio. Ainsi, le contenu média initial (film, documentaire, événement sportif, etc.) peut donner naissance à N (entier) fichiers média accessibles aux utilisateurs dans le système de streaming 100.

De façon connue, un grand nombre de critères peut être utiliser pour différencier plusieurs fichiers média issus d'un même contenu média initial : par exemple, résolution, qualité, débit, fréquence de trame, codec, langue audio, sous-titre, etc.

Les fichiers média ainsi produits sont fragmentés (empaquétés) en segments média unicast qui satisfont un format de streaming unicast. Typiquement, les segments média d'un même fichier média portent le même nom de fichier complété par exemple d'un compteur s'incrémentant.

Les segments média (donc le fichier média d'une qualité donnée) sont stockés sous ces noms de façon permanente dans les serveurs du CDN pour permettre un accès à la demande (VOD).

La Figure illustre trois CDN 110 pour la diffusion unicast des segments média correspondant aux différentes qualités de contenus média accessibles dans le système de streaming représenté. Bien entendu, un nombre différent d'un ou plusieurs CDN est envisageable.

Il est à noter que si par la suite la description se concentre sur la diffusion vidéo, des considérations similaires s'appliquent aux autres composantes d'un service multimédia, typiquement les pistes audio, sous-titrages, données interactives, etc.

Le ou les serveurs de fichiers descriptifs ou « manifests » 120 stockent les fichiers de description 125 des différents contenus stockés sur les CDN 110 et accessibles aux utilisateurs.

De façon connue, un fichier descriptif racine est généré pour chaque contenu multimédia (par exemple une chaîne TV, un titre VOD). Ce fichier de description est appelé « manifest » ou MPD dans le protocole MPEG DASH (« *Moving Picture Experts Group Dynamic Adaptive Streaming over HTTP* » - nom commercial) et « liste de lecture maître » (« *master playlist* ») dans le protocole HLS (pour « *HTTP Live Streaming* »)*.* Le fichier descriptif racine est généré une unique fois pour un contenu média VOD ou est généré dynamiquement pour des événements filmés en direct.

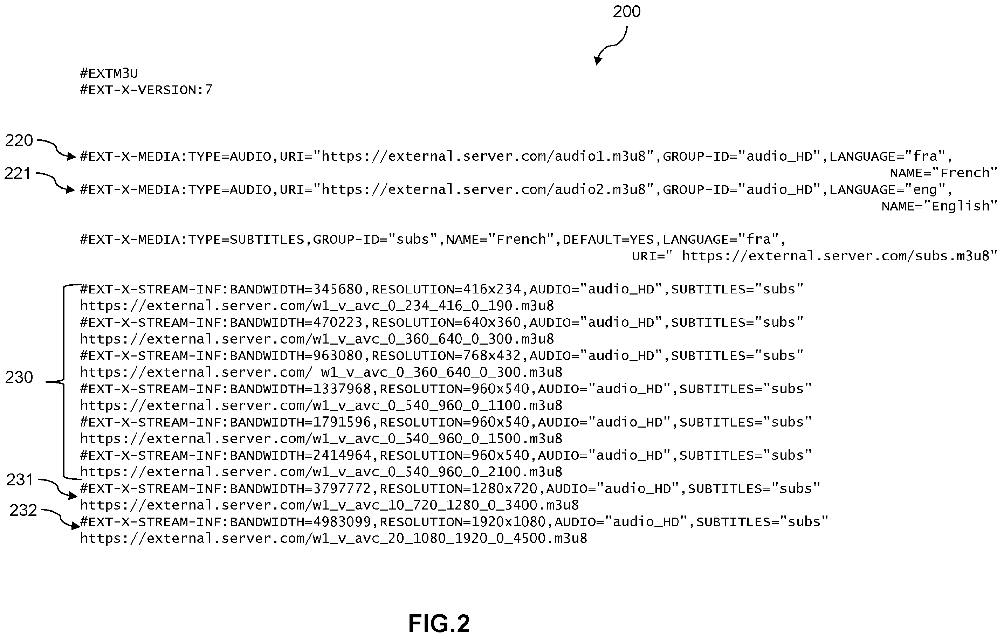

Un exemple de fichier descriptif racine 200 est illustré en **Figure 2** au format HLS. Ce fichier est simplifié aux éléments utiles, pour des raisons de clarté. En pratique, d'autres attributs sont précisés pour les pistes disponibles. Le fichier descriptif racine comprend des metadata (sur les lignes commençant par la balise #) dont certaines définissent une pluralité de pistes qui correspondent aux différents fichiers média disponibles sur le CDN 110, et donc aux différentes qualités accessibles. Chaque piste est composée d'une ligne de metadata spécifiant des attributs de ladite piste et d'une seconde ligne indiquant l'URL d'un fichier associé, descriptif des segments média constituant le fichier média.

Dans cet exemple, la piste 220 définit un contenu audio en français, dont un détail des segments média est fourni dans le fichier descriptif de piste « audio1.m3u8 » stocké sur le serveur « external.server.com » du CDN. De même, la piste 221 définit un contenu audio en version originale, dont un détail des segments média est fourni dans le fichier « audio2.m3u8 ».

Les pistes 230 définissent des contenus vidéo en basse résolution SD avec des paramètres distincts tels la résolution (416 pixels x 234 pixels, 640x360, 768x432, 960x540) ou le débit encodé (« bandwidth »). Un détail des segments média correspondant est fourni dans respectivement les fichiers « w1_v_avc_0_234_416_0_190.m3u8 », « w1_v_avc_0_360_640_0_300.m3u8 », « w1_v_avc_0_360_640_0_300.m3u8 », « w1_v_avc_0_540_960_0_1100.m3u8 », « w1_v_avc_0_540_960_0_1500.m3u8 », « w1_v_avc_0_540_960_0_2100.m3u8 » stockés sur le serveur « external.server.com ». De même, la piste 231 définit un contenu vidéo en haute résolution HD (1280x720), dont un détail des segments média est fourni dans le fichier « w1_v_avc_10_720_1280_0_3400.m3u8 » stocké sur le même serveur. La piste 232 définit un contenu vidéo en Full HD (1920x1080), dont un détail des segments média est fourni dans le fichier « w1_v_avc_20_1080_1920_0_4500.m3u8 » stocké sur le même serveur.

A chaque piste alternative dans le fichier descriptif 200 correspond donc un second fichier descriptif de contenu « m3u8 », ou « fichier descriptif de piste », qui indique les adresses web URL où le lecteur de contenu 199 obtient, par requêtes unicast, les différents segments média constituant le contenu/la piste. Ce fichier comprend un grand nombre d'éléments descriptifs correspondant à des segments média respectifs, chaque élément descriptif précisant l'URL (relatif si sur le même serveur ou absolu sinon) où est stocké le segment média correspondant. En d'autres termes, ce fichier est basiquement une playlist d'URLs.

Le dernier élément descriptif du fichier descriptif de piste correspond au dernier segment média « disponible » du streaming. Les éléments descriptifs précédentes correspondent aux segments média « antérieurs ». Leur présence dans le fichier descriptif offre la possibilité au lecteur vidéo utilisateur d'un retour en arrière « startover ». La profondeur de « startover » (donc le nombre d'éléments descriptifs indiqués) est ajustable.

Le cas du format DASH est légèrement différent. Le fichier descriptif racine MPD de DASH liste les différentes qualités / pistes disponibles et comporte directement, pour chacune de ces qualités / pistes, les URL où le lecteur de contenu 199 obtient, par requêtes unicast, les différents segments média de la piste. Aussi, dans le format DASH, il n'y a pas de fichier descriptif de piste; le fichier racine MPD fusionne, en un seul fichier, à la fois le fichier master playlist de HLS et les multiples fichiers media playlists HLS correspondants. Les URL peuvent être des adresses absolues pour le cas où les segments média sont stockés sur un autre serveur que celui délivrant le fichier racine MPD.

Les fichiers descriptifs sont obtenus par le lecteur de contenu 199 sur requêtes auprès du serveur 120. De façon connue, le lecteur de contenu 199 demande le fichier descriptif racine 200 d'un contenu multimédia auquel il souhaite accéder, sélectionne l'une des pistes selon la qualité/résolution souhaitée (ou supportée) et demande, dans le cas HLS, le fichier descriptif de piste correspondant à la piste sélectionnée. C'est alors qu'il peut solliciter le CDN 110 (par requêtes unicast) pour obtenir les segments média successifs auprès du CDN, typiquement pour une piste audio, une piste vidéo et optionnellement une piste de sous-titre.

Les CDN 110 sont des infrastructures classiques basées sur HTTP, typiquement des serveurs standard DASH ou HLS sécurisés (donc HTTPs). Ils réalisent une diffusion/streaming unicast des contenus, c'est-à-dire qu'ils délivrent les segments médias aux lecteurs de contenu utilisateurs sur requêtes.

Les requêtes et segments média renvoyés transitent au travers du réseau public de communication 130 typiquement le réseau Internet, possiblement via un autre réseau de communication, par exemple un réseau de téléphonie mobile 140 pour le cas où le lecteur de contenu utilisateur équipe un terminal utilisateur de type téléphone connecté au réseau 140.

La **Figure 1** illustre une adaptation du système à un environnement collectif (aéroport, gare, etc.), et notamment à un environnement mobile type transport collectif tel qu'un véhicule (train, avion, bateau/ferry, car, etc.). Bien qu'il ne soit représenté qu'un seul environnement collectif 150, plusieurs peuvent exister simultanément dans lesquels des utilisateurs ont accès au service de streaming tel que décrit par la suite. Typiquement plusieurs trains peuvent opérer simultanément. La suite de la description s'appuie sur un environnement mobile de type train à des fins illustratives seulement. Elle s'applique donc à tout autre environnement mobile.

Comme illustré sur la Figure, le train 150 comprend une interface de communication 151 avec l'extérieur (notamment les CDN 110), un serveur de cache 152 et un ou plusieurs terminaux utilisateur dotés de lecteurs de contenu 199, ainsi qu'un réseau de communication local 160 auquel sont connectées ces différentes entités. Le réseau de communication local 160 peut être filaire ou non, typiquement un réseau WLAN embarqué. Le train est par ailleurs connecté à un réseau de communication externe, tel le réseau 130 ou 140, lui donnant accès aux serveurs externes 110 et 120.

Par la suite, la notion de « local » se rapporte aux éléments et opérations embarqués dans le train 150 par opposition aux éléments et opérations des serveurs 110 et 120.

Un terminal utilisateur peut prendre la forme d'un téléphone intelligent (smartphone), d'une tablette, d'un ordinateur portable ou de bureau, d'un objet connecté (télévision, montre, appareil photo, lunettes de réalité virtuelle ou mixte, etc.). Un terminal utilisateur est relié au réseau local par liaison filaire (câble Ethernet) ou sans-fil (wifi). Un terminal utilisateur, typiquement un téléphone ou une tablette, peut en outre être connectée au réseau de téléphonie mobile 140 (notamment lorsque l'utilisateur sort du train). Un tel terminal a donc la possibilité de basculer d'un réseau (local) à l'autre (mobile).

L'accès au service de streaming par les lecteurs de contenu utilisateurs 199 peut se faire à l'aide d'une application dédiée de lecture exécutée sur le terminal utilisateur ou au travers d'un navigateur web du terminal utilisateur qui exécute ledit lecteur vidéo. Par exemple, un téléphone connecté au réseau de téléphonie mobile 140 accède au service de streaming de façon classique par requêtes unicast vers le CDN (pour récupérer les fichiers manifest 125 puis les segments média). Un terminal connecté au réseau WLAN embarqué ou « local » 160 accède au service de streaming de façon classique par requêtes unicast vers le CDN, lesquelles peuvent être interceptées par le serveur de cache 152.

Le serveur de cache 152 est un serveur dédié à la sauvegarde temporaire (ou « cache ») en local de différents contenus média précédemment consultés, typiquement des segments média accédés. En enregistrant ces données, le serveur de cache accélère l'accès à celles-ci lors de consultations ultérieures, tout en diminuant la sollicitation de la bande passante de la liaison de communication vers les CDN 110.

Le serveur de cache 152 est un serveur proxy (ou serveur de délégation) qui interface le réseau local 160 avec le réseau extérieur 130, intercepte les requêtes des utilisateurs vers le réseau extérieur 130 et les traite localement dans la mesure du possible. Toute requête unicast d'un fichier manifest descriptif de piste ou d'un segment média stocké sur un CDN 110 est ainsi interceptée par le serveur de cache 152 qui fournit les données demandées si elles sont en mémoire cache du serveur 152, sans solliciter le CDN 110, ou qui retransmet la requête unicast sur le réseau externe 130 au CDN 110 si les données demandées ne sont pas en mémoire cache.

Certaines données (fichiers manifest descriptifs de piste ou segments média) peuvent être pré-mises en mémoire cache du serveur 152 afin d'accroître l'accès accéléré aux contenus média. On entend par « pré-mettre en mémoire cache des données » le fait de stocker ces données dans la mémoire du serveur cache avant même qu'un utilisateur ne les ait consultées. L'expression « pré-cacher » utilisée indifféremment a la même signification : pré-charger des données en mémoire cache en amont à toute consultation/sollicitation de celles-ci.

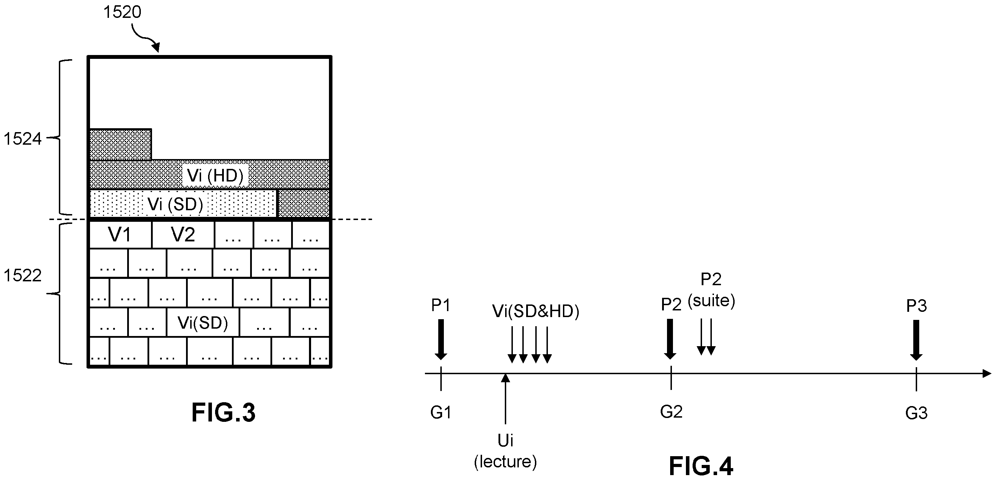

La **Figure 3** illustre schématiquement une mémoire 1520 de serveur de cache 152, de type mémoire de stockage d'une capacité d'un ou plusieurs téraoctets (To).

Cette mémoire peut être divisée en deux parties, l'une 1522 pour le pré-caching de données et l'autre 1524 pour le caching classique de données (c'est-à-dire lors de la consultation des données par un utilisateur local). La proportion de mémoire disponible dédiée au pré-caching et dédiée au caching classique peut être ajustée selon les besoins. Une répartition statique peut être utilisée, par exemple 80% pour le pré-caching et 20% pour le caching ou par exemple une quantité donnée correspondant au temps de trajet multiplié par la bande passante moyenne peut être réservée pour le caching. Une répartition dynamique peut être également mise en place où des segments média à cacher qui sont plus prioritaires que des segments pré-cachés viennent remplacer ces derniers, modifiant la répartition de la mémoire 1520.

Cette approche dynamique permet également d'utiliser un mémoire 1520 sans division : des segments média stockés les moins prioritaires étant remplacés par des segments plus prioritaires en cours de caching en cas de manque d'espace mémoire.

Des données (typiquement des segments média) de contenus média disponibles auprès du ou des CDN 110 externes sont pré-mises en mémoire cache 1522 du serveur de cache embarqué 152, par exemple dans une gare de départ du train 150.

En particulier, une portion ou partie de début seulement d'un ou plusieurs contenus média est pré-mise en mémoire cache 1522. Il s'agit ici de mettre en mémoire 1522 les segments média qui composent le début du contenu média, de l'une ou plusieurs de ses qualités / pistes et non leur entièreté, avant qu'un utilisateur ne les consulte.

La **Figure 3** illustre qu'un grand nombre de débuts de contenus média V1, V2, ..., Vi, peut ainsi être pré-caché, permettant de fiabiliser le lancement en lecture d'un plus grand nombre de contenus média par des utilisateurs locaux au train 150. La lecture du reste du contenu média peut être réalisée « à la volée », c'est-à-dire par récupération des segments vidéo auprès des CDN 110 pendant le trajet du train. Dans cette figure, V1 représente l'ensemble des segments média pré-chargés pour le contenu V1, incluant les éventuelles multiples pistes de ce contenu média.

La description qui suit expose des modes de réalisation pour la détermination de ces portions de début à pré-mettre en cache.

La **Figure 1** illustre également un gestionnaire de pré-caching 153 dédié à ces opérations de pré-caching dans le train 150. Ce gestionnaire de pré-caching 153 peut être un dispositif embarqué distinct du serveur de cache 152 (comme sur la Figure) ou être intégré au serveur de cache 152 lui-même. Dans ce cas, le gestionnaire de pré-caching 153 s'occupe des opérations de pré-caching dans le train 150 uniquement. En variante, le gestionnaire de pré-caching peut être externe (non représenté) et gérer le pré-caching d'une flotte de trains, chaque train ayant ses propres plans de pré-mise en mémoire cache et ses propres sessions de synchronisation selon ces plans opérationnels.

Un plan de pré-mise en mémoire cache définit les segments média concernés par une pré-mise en cache 1522, c'est-à-dire les contenus média concernés, y compris les pistes concernées et leurs longueurs des portions de début respectives.

Comme illustré en **Figure 4,** une première session de synchronisation de pré-caching peut être lancée selon un premier plan P1 lorsque le train 150 est dans une première gare G1 ; une deuxième session de synchronisation de pré-caching ultérieure est lancée selon un deuxième plan P2, distinct de P1, lorsque le train 150 est dans une deuxième gare G2 ; une troisième session de synchronisation de pré-caching ultérieure est lancée selon un troisième plan P3, toujours distinct du précédent, lorsque le train 150 est dans une troisième gare G3.

Des segments média, donc des contenus média, peuvent ainsi être montés ou baissés en priorité de cache avant même une première consultation par un utilisateur. La Figure illustre une fréquence possible de rafraichissement du pré-cache 1522.

Les gares G1 à G3 sont par exemple des gares de départ de trajets distincts du train, auquel cas les plans P1 à P3 sont susceptibles d'être substantiellement différents. Les gares de départ présentent l'avantage de disposer de temps plus longs d'immobilisation du train, permettant une synchronisation de pré-caching de meilleure qualité.

Les gares G2 et G3 peuvent en variante être des gares d'arrêt intermédiaires du train sur un trajet donnée. Les plans P1 à P3 sont alors susceptibles d'être substantiellement similaires, des ajustements pouvant être effectués (comme décrits par la suite), en fonction des passagers descendants et montants aux gares intermédiaires, voire en fonction de nouveaux contenus (par exemple à très forte audience) mis à disposition pendant le trajet du train. Les sessions de synchronisation sont alors compatibles avec une immobilisation plus brève du train dans ces gares.

Selon le temps d'immobilisation en gare, les synchronisations peuvent être complètes en gare ou partielles et se poursuivre pendant le trajet du train, éventuellement dans une gare d'arrêt intermédiaire suivante.

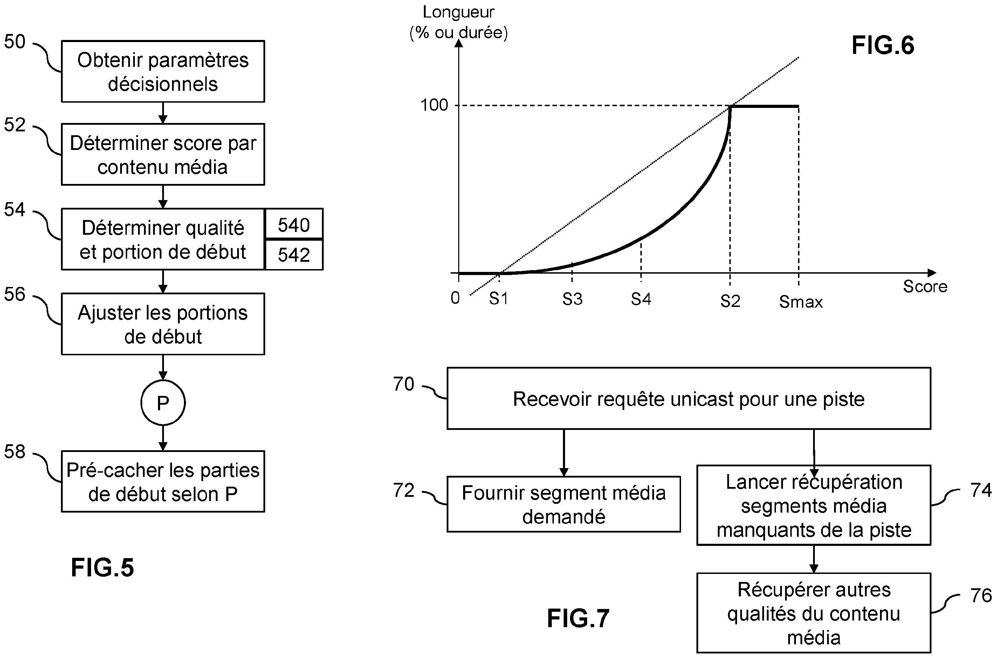

La **Figure 5** illustre, à l'aide d'un ordinogramme, des étapes d'un procédé d'établissement d'un plan de pré-caching P et de réalisation de la session de synchronisation correspondante. Ces étapes sont mises en oeuvre par le gestionnaire de pré-caching 153.

A l'étape 50, le gestionnaire de pré-caching 153 obtient des paramètres décisionnels qui peuvent concerner tout ou partie d'informations relatives aux contenus, au trajet et aux voyageurs.

Des informations décisionnelles relatives aux contenus incluent par exemple une prévision d'audience. Cette prévision peut être établie par fenêtre temporelle, certains contenus étant en effet plus consommés à certains horaires spécifiques.

Les prévisions d'audience incluent par exemple une indication éditoriale, une indication de si le contenu média est à forte audience, s'il s'agit d'un épisode d'une série à forte audience, s'il est mis en avant sur le service de streaming (sur une page d'accueil typiquement), s'il est nouvellement ajouté au catalogue.

Des informations décisionnelles relatives au trajet incluent par exemple l'horaire entre les gares G1 et G2 de deux sessions de synchronisation successives.

Des informations décisionnelles relatives aux voyageurs incluent par exemple des préférences ou souhaits de consommation des voyageurs participant au trajet entre les gares G1 et G2 de deux sessions de synchronisation successives. Ces préférences peuvent inclure une typologie de contenus média consommés, une liste de série en cours de visionnage, des contenus en cours de visionnage (avec leur position courante de lecture).

A l'étape 52, le gestionnaire de pré-caching 153 détermine un score pour chaque contenu média, à partir de ces informations décisionnelles, notamment un score sur le trajet à venir entre les gares G1 et G2. Le score peut être un nombre entre 0 et 10 ou un pourcentage entre 0 et 100.

De façon simple, une table de correspondance, à multiples entrées le cas échéant, peut faire correspondre des valeurs ou états de ces informations décisionnelles à un score.

Un objectif est de déterminer les contenus, et donc leurs segments média, qui auront le plus de chance d'être lus sur ce trajet. A défaut de connaître l'instant de la prochaine synchronisation, une durée préfixée peut être utilisée, par exemple 2h ou 3h pour un train. Le pré-caching des contenus média peut ainsi être optimal pour les consommations pendant ce trajet.

Les scores reflètent typiquement les chances ou probabilité de visionnage des segments média de ces contenus considérés. Aussi, les scores sont calculés en fonction des informations décisionnelles relatives aux contenus : un contenu média à forte audience est affecté d'un score plus élevé qu'un contenu média à faible audience. Toute fonction de correspondance entre un indicateur d'audience et un score (par exemple entre 0 et 10) peut être mise en place.

Dans un mode de réalisation, les scores associés aux contenus média sont fonction des utilisateurs du train entre les deux sessions de synchronisation. Typiquement, les épisodes suivants d'une série en cours de visionnage sont affectés d'un score élevé, par exemple 8. De même, les contenus média en cours de visionnage sont affectés d'un score élevé, par exemple 8.

Optionnellement, les utilisateurs peuvent déclarer les contenus qu'ils envisagent de visionner pendant le trajet, auquel cas ces contenus média peuvent être affectés d'un score élevé, voire maximal 10. Ce score peut être d'autant plus élevé que le nombre d'utilisateurs ayant effectué une telle déclaration est élevé.

Dans un autre mode de réalisation, les scores associés aux contenus média sont fonction d'un horaire entre les deux sessions de synchronisation. Pour des contenus média dont l'audience est susceptible de varier dans le temps, on tient ici compte de l'horaire du trajet pour utiliser l'audience théorique correspondante dans le calcul du score.

A l'étape 54, le gestionnaire de pré-caching 153 détermine la ou les qualités (ou pistes) à pré-cacher ainsi que les longueurs des portions à pré-cacher pour chacun des contenus média, en fonction du score obtenu pour le contenu considéré. Le gestionnaire a en effet pour rôle de contrôler la pré-mise en mémoire cache 1522 des contenus média.

Un objectif de l'étape 54 est de prévoir la pré-mise en cache au début du trajet d'un maximum de contenus média pour une meilleure expérience utilisateur.

L'étape 54 comprend deux sous-étapes : la détermination 540 de la ou les qualités à pré-cacher et la détermination 542 de la longueur à pré-cacher soit pour le contenu média dans sa globalité soit pour chaque qualité à pré-cacher.

De façon simple, chaque sous-étape peut mettre en oeuvre une table de correspondances qui associe, d'une part, les valeurs de score ci-dessus à des pistes / qualités à précharger, éventuellement selon un ou plusieurs autres critères évoqués ci-après, et d'autre part, les valeurs de score à des longueurs de contenu média à précharger, éventuellement selon un ou plusieurs autres critères évoqués ci-après.

Les deux sous-étapes peuvent être réalisées simultanément via une table de correspondances commune. Par exemple, les scores permettent de distinguer entre :
les contenus de très faible score dont on ne précache rien,
les contenus de faible score plus élevé dont on précache une faible partie uniquement de la piste SD,
les contenus de score moyen plus élevé dont on précache une partie plus importante uniquement de la piste SD,
les contenus de bon score plus élevé dont on précache une partie de la piste HD, en plus de toute ou partie de la piste SD,
les contenus de score élevé dont on précache une grande partie de la piste HD, en plus de toute ou grande partie de la piste SD, et
les contenus de score maximal dont on précache l'intégralité des pistes HD et SD.

Un classement des contenus est ainsi obtenu en fonction de leurs scores.

Bien entendu, cet exemple peut être ajusté à un plus grand nombre de pistes et avec un plus grand nombre de niveaux de distinctions. Les pistes SD et HD sont utilisées à titre illustratif, et d'autres pistes notamment HD, FHD peuvent être utilisées à la place. Les « parties » de piste peuvent être considérées en termes de pourcentage comme évoqué par la suite.

L'étape 54 peut être mise en oeuvre pour les contenus média dont le score associé est supérieur à un seuil bas de déclenchement S1 (comme décrit par la suite). Dans l'exemple ci-dessus, pour les contenus de faible score, on ne précache rien.

La détermination 540 des qualités (ou pistes) à pré-cacher est optionnelle dans la mesure où certains contenus média peuvent n'être disponibles que selon une seule qualité ou dans la mesure où il peut être décidé de pré-cacher de façon identique toutes les qualités disponibles d'un contenu média.

Le choix de la ou des qualités / pistes à pré-cacher est fonction du score obtenu pour un contenu média donné, comme illustré dans l'exemple ci-dessus.

Un schéma de pré-caching peut prévoir que pour un contenu média à très forte audience (score élevé), une qualité élevée soit pré-cachée pour offrir une expérience utilisateur élevée. En revanche, pour un contenu média à plus faible probabilité de visionnage, seule une qualité faible peut être pré-cachée pour réduire le gaspillage d'espace mémoire en cas de non-visionnage.

Selon un schéma complémentaire de pré-caching, plusieurs qualités d'un contenu média à très forte audience peuvent être pré-mises en mémoire cache, pour maximiser la compatibilité et qualité. Typiquement, les pistes 4K, HD et SD peuvent être préchargées, la piste 4K n'étant pas lisible par tous les terminaux utilisateurs. Dans un mode de réalisation particulier, une qualité faible (par exemple SD) est systématiquement pré-cachée pour garantir un maximum de compatibilité.

En revanche, pour un contenu à faible probabilité de visionnage, le pré-caching d'une seule piste de qualité faible et compatible avec tous les terminaux utilisateurs s'avère suffisante.

A titre illustratif, les contenus média ayant des scores compris entre S1 et un seuil intermédiaire S3 **(****Figure 6** décrite ci-après) sont uniquement (et partiellement) pré-cachés dans cette qualité (piste) faible compatible avec tous les terminaux. Dans l'exemple ci-dessus, pour les contenus de score moyen, on précache une faible partie uniquement de la piste SD.

Par ailleurs, les contenus média ayant des scores au-delà d'un deuxième seuil intermédiaire S4 sont pré-cachés avec une piste de qualité élevée et optionnellement avec une ou plusieurs pistes de qualités moindres. Dans l'exemple ci-dessus, pour les contenus de score élevé, on précache une grande partie de la piste HD en plus de toute ou partie de la piste SD.

Entre les deux seuils intermédiaires, le pré-caching de pistes de qualités intermédiaires peut être envisagé. Dans l'exemple ci-dessus, pour les contenus de score moyen ou bon, on précache une partie plus importante uniquement de la piste SD que pour les scores moindres, voire une partie de la piste HD en plus de toute ou partie de la piste SD.

Au-delà d'un seuil maximal S2, le pré-caching intégral de toutes ou partie des pistes disponibles peut être envisagé. Dans l'exemple ci-dessus, pour les contenus de score maximal, on précache l'intégralité des pistes HD et SD.

Les seuils S1 et S2 peuvent être omis.

Dans un mode de réalisation, la détermination de la ou des qualités / pistes à pré-cacher est fonction de l'espace de stockage disponible en mémoire cache 1522. En effet, si cet espace mémoire est limité comparativement à la taille du catalogue de contenus média, il peut être décidé de ne pré-cacher des segments média que d'une piste (ou d'un nombre limité de pistes) par contenu média au maximum.

Plus généralement, l'espace de stockage disponible peut conditionner le nombre de contenus média dont les segments média peuvent être pré-cachés partiellement, pour une quantité estimée à pré-cacher par contenu média.

Dans un autre mode de réalisation, la détermination de la ou des qualités à pré-cacher est fonction d'une estimation d'une bande passante (ou débit) disponible sur la liaison de communication entre le train 150 et les CDN 110. En effet, si la liaison de communication est de bonne qualité, un chargement à la volée de segments média de qualité élevée devrait être possible. Dans ce cas, le pré-caching de pistes aux qualités élevées peut être plébiscité pour certains contenus (notamment ceux ayant un score élevé). A l'inverse, une mauvaise qualité moyenne de liaison de communication peut conduire à n'autoriser que le pré-caching de pistes de qualités intermédiaires et/ou faibles.

La bande passante moyenne est estimée pour le trajet où les contenus seront consommés par les voyageurs, typiquement entre les gares G1 et G2 de deux sessions de synchronisation successives. Elle peut être connue de précédents voyages réalisés entre les deux mêmes gares. En variante, une bande passante préfixée, moyenne pour tout un réseau ferré, peut être utilisée.

Aussi, des tables de correspondances différentes peuvent être utilisées selon la taille du catalogue, l'espace de stockage disponible en mémoire cache 1522, l'estimation de bande passante.

La **Figure 6** illustre, à l'aide d'un graphique, un exemple de longueur de piste (donc quantité de média segments) à pré-cacher (entre 0 et 100% du contenu) en fonction du score (entre 0 et max) obtenu pour le contenu média concerné.

Plusieurs graphiques peuvent être mis en oeuvre, l'un pour déterminer la longueur de portion de début d'une piste SD, un autre pour la piste HD, etc. En effet, comme dans l'exemple plus haut, des quantités distinctes peuvent être pré-cachées pour deux pistes distinctes.

En variante, le même graphique peut s'appliquer à plusieurs, voire toutes, pistes d'un contenu média.

Cet exemple de la **Figure 6** applicable à un type de qualité / piste montre qu'aucun segment média de la piste n'est pré-caché en mémoire cache 1522 pour un contenu au score trop faible (inférieur au seuil bas S1), que tous les segments média de la piste sont pré-cachés pour un contenu aux score très élevé (supérieur au seuil haut S2), et que la quantité de segments média de la piste à pré-cacher augmente progressivement en fonction du score pour les contenus aux scores intermédiaires (entre S1 et S2).

L'étape 540 peut ainsi déterminer la ou les pistes / qualités à pré-cacher partiellement ou entièrement, ainsi que la quantité de segments média (portion de début) à pré-cacher en cas de pré-caching partiel.

Il est fait référence ci-après à la portion de début du contenu média pour désigner la portion de début de l'une quelconque des qualités à pré-cacher lorsque les qualités sont traitées séparément ou pour désigner la portion de début de façon commune pour l'ensemble des qualités à pré-cacher dans l'autre cas. Une portion de début correspond à une quantité de segments média qui commencent la piste concernée.

La Figure montre que la longueur à pré-cacher, c'est-à-dire la quantité de segments média commençant la piste concernée, est importante pour des contenus média à score élevé (forte probabilité d'être visionnés) et qu'elle diminue rapidement avec le score. Ici la relation mathématique entre le score (typiquement entre les deux seuils S1 et S2) et la longueur de la portion de début à pré-mettre en mémoire cache est convexe (courbe sous la droite inclinée en pointillés). Cela permet d'optimiser l'expérience utilisateur moyenne en garantissant une lecture locale plus importante pour les contenus à score élevé (donc à probabilité forte d'être visualisés) tout en assurant un début de lecture sans coupure pour les autres contenus susceptibles d'être consommés localement.

Dans un mode de réalisation, le pré-caching partiel peut être limité à un pourcentage maximal inférieur à 100%, par exemple 50%, signifiant que la première moitié d'une piste d'un contenu média dont le score est juste en dessous de S2 est pré-cachée alors que l'entièreté de la piste est pré-cachée pour un score juste au-dessus de S2.

Comme dans cet exemple, la longueur de la portion de début à pré-cacher d'un contenu média peut correspondre à un pourcentage dudit contenu média. Le pourcentage des segments vidéo à pré-cacher est donc déterminé en fonction du score associé au contenu média.

En variante, cette longueur peut correspondre à une durée dudit contenu média. Ici, on cherche à garantir une durée de lecture sans coupure, durée qui est donc déterminée en fonction du score associé au contenu média, c'est-à-dire de la probabilité de lecture locale du contenu média pendant le trajet. Le pré-caching partiel peut être limité à une durée maximale inférieur à la durée totale du contenu média considéré. Dans ce cas où la quantité de segments média à pré-cacher est déterminée à partir de la durée de pré-caching, un contenu média long aura au final un pourcentage plus faible de segments média pré-cachés par rapport à un contenu très court ayant le même score (probabilité de lecture).

Dans un mode de réalisation, les longueurs des portions de début à pré-cacher des contenus média sont fonction de l'espace de stockage disponible en mémoire cache 1522. En effet, l'espace de stockage disponible conditionne la quantité de segments média pouvant être pré-cachés par contenu média ou piste, pour un nombre connu de contenus ou pistes à pré-cacher.

Une optimisation des longueurs peut être obtenue, par calcul, simulation ou modélisation, pour permettre de pré-cacher au moins partiellement un nombre donné (ou pourcentage) de contenus média du catalogue. Notamment, les seuils S1, S2 (voire S3 et S4), ainsi que la pente de la courbe de la **Figure 6** entre S1 et S2 peuvent être ajustés pour maximiser l'utilisation de l'espace mémoire disponible avec ce nombre donnée de contenus pré-cachés au moins partiellement.

Dans un mode de réalisation, la longueur de la portion de début à pré-cacher d'un contenu média est fonction d'une estimation de la bande passante disponible sur la liaison de communication entre le train 150 et les CDN 110. Puisqu'il est souhaité que la lecture du contenu média ne souffre pas de coupure, la quantité de segments média pré-cachés (correspondant à une durée pré-cachée) devrait être telle que la récupération des segments média manquants soit suffisamment progressive avec la bande passante disponible pour éviter que la lecture ne rattrape la fin du cache.

Cette récupération progressive est fonction du débit de la piste / qualité lue, cette information de débit étant notamment indiquée dans le fichier manifest descriptif 125 (métadonnée « BANDWIDTH » dans l'exemple de la **Figure 2****).** Aussi, la longueur de la portion de début à pré-cacher d'une qualité (ou piste) peut également être fonction du débit de la qualité et du score associé au contenu média. Plus une piste est de qualité élevée (donc avec un débit élevé), plus il apparaît utile de pré-mettre en cache une partie plus importante de la piste, car une lecture sans coupure jusqu'à la fin du contenu est plus complexe à garantir. Réciproquement, avec un débit faible, il est plus aisé de récupérer les segments vidéo manquants via la liaison de communication.

L'estimation de bande passante peut également inclure une information sur d'éventuelles interruptions de la liaison de communication vers les CDN 110, typiquement lors de tunnels ou de zones non couvertes. Dans ce cas, la longueur pré-cachée peut être au moins également à l'interruption coupure maximale (en temps) de la liaison de communication, afin de réduire les risques d'une coupure de lecture du contenu média.

A titre illustratif uniquement, un exemple simple de détermination des longueurs des portions de début à pré-cacher peut être basé sur les règles suivantes :

Pour des scores entre 0 et 1 (seuil S1), pas de pré-caching de piste.

Pour des scores entre 1 et 3 (seuil S3), pré-caching des 10% premiers segments média de la piste SD.

Pour des scores entre 3 et 5, pré-caching des 25% premiers segments média de la piste SD.

Pour des scores entre 5 et 7 (seuil S4), pré-caching des 25% premiers segments média de la piste SD et pré-caching des 10% premiers segments d'une piste de qualité élevée (HD ou FHD ou UHD).

Pour des scores entre 7 et 9 (seuil S2), pré-caching des 25% premiers segments média de la piste SD et pré-caching des 25% premiers segments d'une piste de qualité élevée (HD ou FHD ou UHD).

Pour des scores entre 9 et 10, pré-caching de l'entièreté de la piste SD et d'une (ou plusieurs) piste de qualité élevée (HD ou FHD ou UHD).

Dans une variante basée sur la durée à pré-cacher, 10% peut être remplacé par 5 ou 15 minutes à pré-charger et 25% par 15 ou 30 minutes à pré-cacher.

L'étape 54 (Figure 5) est suivie de l'étape optionnelle 56 d'ajustement des portions de début à précharger, telles que déterminées à l'étape 54.

Cette étape optionnelle peut notamment être fonction des utilisateurs du train 150 entre les gares G1 et G2 de deux sessions de synchronisation successives. Comme indiqué plus haut, certains contenus média peuvent avoir été mis en pause précédemment par des voyageurs du train. Les positions de lecture (ou de mise en pause) sont récupérées et par exemple la plus avancée par contenu média (éventuellement sous un seuil maximal d'avancement) est obtenue.

La position de lecture la plus avancé d'un contenu média est prise en compte pour étendre la longueur de la portion de début à pré-cacher pour ce contenu média au-delà de cette position de lecture, typiquement étendue du pourcentage (10% ou 25%) ou de la durée (5 min ou 15 min) mentionné ci-dessus.

L'étape 56 permet ainsi aux voyageurs de poursuivre leur lecture déjà entamée, sans coupure.

Optionnellement, cette étape 56 permet d'ajuster des longueurs à pré-charger à des données déjà en mémoire cache 1522 (issues d'une session de synchronisation précédente). En effet, il peut être bénéfique de réduire la quantité de données à pré-charger en mémoire cache 1522 lors d'une session de synchronisation.

A titre d'exemple, si une piste est déjà pré-cachée à hauteur de 25% pour un contenu média, le pré-caching peut être maintenu inchangé même si l'étape 54 a pu déterminer qu'une autre piste devrait être pré-cachée partiellement.

A l'issue de l'étape 56 (ou l'étape 54 en cas d'absence de l'étape 56), un plan de pré-mise en mémoire cache P est obtenu qui définit les contenus média (et leurs qualités) concernés par une pré-mise en cache et leurs segments média (pistes concernées et longueur des portions de début) qu'il convient de pré-mettre en mémoire cache 1522.

Ainsi, à l'étape 58, cette pré-mise en mémoire cache 1522 est réalisée conformément au plan P. Il s'agit de charger en mémoire cache 1522 les segments média correspondants aux portions de début déterminées.

Cette étape est typiquement réalisée lors d'une immobilisation du train 150 dans les ateliers avant un trajet ou tout simplement en gare (G1, G2 ou G3).

La bande passante disponible pendant l'immobilisation du train peut être suffisante pour pré-cacher l'ensemble des segments média souhaités. C'est ce qui est illustré par le pré-caching en gare G1 de la **Figure 4.**

Néanmoins, il peut arriver, par exemple en cas d'immobilisation courte dans une gare intermédiaire G2, que la session de synchronisation selon le plan P2 ne soit pas terminée lorsque le train 150 repart. Dans ce cas, comme illustré toujours sur la **Figure 4,** la session de synchronisation peut se poursuivre pendant le début du trajet, en utilisant la liaison de communication avec les CDN 110, et/ou se poursuivre au prochain arrêt dans une gare intermédiaire, tant qu'une nouvelle session de synchronisation n'est pas entamée.

Plusieurs politiques de priorisation des segments média pour leur pré-chargement en mémoire cache 1522 peuvent être envisagées. Ces politiques de priorisation déterminent une liste ordonnée des segments média selon des priorités attribuées aux segments média, et le pré-chargement des segments média en mémoire cache 1522 est alors réalisé par priorité décroissante.

Des priorités sont donc déterminées pour les segments média à pré-cacher.

Dans un premier mode de réalisation, les segments média d'une piste peuvent être affectés d'une priorité fonction du score du contenu média. En cas de synchronisation incomplète, le début de chaque contenu média à forte probabilité de visionnage est ainsi en mémoire cache 1522, garantissant une lecture possible du contenu média par les voyageurs.

Par exemple, la priorité peut être égale au score du contenu média : les segments média des contenus à scores élevés sont ainsi plus prioritaires pour le pré-chargement en mémoire cache 1522.

Dans un mode de réalisation, priorité est donnée aux segments média du début de la piste par rapport aux suivants. Dans ce cas, la priorité peut être basée sur le score du contenu média correspondant et fonction de la position du segment média dans le contenu média, typiquement dégressive avec l'avancement de la position.

A titre d'exemple, une fonction continue, éventuellement linéaire, ou à paliers peut définir la priorité entre une priorité haute (correspondant par exemple au score du contenu média) pour le premier segment de la portion de début à pré-charger et une priorité faible (par exemple 0 ou un pourcentage tel 50% de la priorité haute) pour le dernier segment de la portion de début à pré-charger.

Dans un mode de réalisation, priorité est donnée au chargement des portions de début de pistes de qualité faible (type piste SD) par rapport aux portions de début des pistes de qualité élevée, pour le même contenu média. Aussi, des priorités plus importantes sont affectées aux segments média des pistes de qualité faible par rapport aux segments média des pistes de qualité élevée.

Cela permet de maximiser la compatibilité puisque les pistes de qualité faible et compatibles seront pré-cachées même si la session de synchronisation n'est pas terminée à temps.

Par exemple, tous les segments média des pistes SD sont pré-cachés avant ceux des pistes HD, eux-mêmes avant ceux des pistes FHD et enfin 4K (UHD).

Dans un mode de réalisation, préférence est donnée à un chargement progressif simultané de toutes les portions de début, éventuellement par qualité de piste (SD, puis HD, puis FHD et 4K).

Typiquement, le début de chaque contenu média (ou piste) est pré-caché en avançant progressivement le pourcentage de mise en cache de chaque contenu média. Par exemple, le premier pourcent de chaque piste SD est chargé en mémoire cache 1522 avant de précharger le pourcent suivant, et ainsi de suite. Bien entendu, un autre pas que le pourcentage peut être utilisé, par exemple de 5% en 5% ou de minute en minute ou de segment média en segment média.

Dans ce dernier cas par exemple, la priorité affectée à un segment média est fonction de sa position dans le contenu média. Par exemple, le premier segment média d'une piste est affecté d'une priorité maximale 1, le deuxième segment média d'une priorité 2, et ainsi de suite.

Ici également, il s'agit de s'assurer, en cas de synchronisation incomplète, que le début de chaque contenu média à forte probabilité de visionnage soit en mémoire cache 1522, et que les voyageurs pourront lire le début du contenu média.

La **Figure 7** illustre, à l'aide d'un ordinogramme, des étapes d'un procédé de streaming dans un système prévoyant le pré-caching partiel de contenus média. Ces étapes sont mises en oeuvre par le serveur de cache embarqué 152.

Au lancement de la lecture d'une piste d'un contenu média, le lecteur de contenu 199 récupère le fichier manifest de piste listant les segments média à récupérer, comme décrit plus haut. Ainsi, les opérations de streaming consistent principalement à l'envoi, par le lecteur, de requêtes successives à destination des CDN 110 pour la récupération des segments média.

En cas de lancement de la lecture au début du contenu média, les premiers segments média sont demandés. Le pré-caching permet de les renvoyer rapidement au lecteur 199.

En cas de lancement de la lecture dans une position avancée du contenu média, les segments média correspondants sont demandés, lesquels peuvent être pré-cachés ou non.

A l'étape 70, le serveur de cache 152 intercepte une requête unicast du lecteur 199 à destination d'un CDN 110 pour l'obtention d'un segment média.

Le serveur de cache 152 détermine de façon classique s'il dispose déjà en mémoire cache le segment média demandé.

Si tel est le cas, il fournit le segment média en réponse à la requête unicast, laquelle n'est pas transmise au CDN 110.

Dans l'autre cas, le serveur 152 transmet la requête unicast au CDN 110, lequel renvoie le segment demandé au lecteur 199, via le serveur de cache
La fourniture du segment média correspond à l'étape 72.

Par ailleurs, le serveur de cache 152 détermine s'il s'agit d'un nouveau contenu média mis en lecture par un voyageur depuis la dernière session de synchronisation. C'est le cas si aucune requête unicast n'a été reçue pour ce contenu média.

Si tel est le cas, le serveur de cache 152 déclenche (étape 74) le chargement, via la liaison de communication avec les CDN 110, des segments média manquants de la piste en cours de lecture.

L'objectif ici est d'anticiper la récupération des segments média qui seront nécessaires à la lecture complète du contenu média, sans coupure.

Comme un utilisateur peut mettre en lecture un contenu média et rapidement décider de ne pas le regarder en entier, dans un mode de réalisation, le déclenchement du chargement des segments média manquants est effectuée après un délai de confirmation, par exemple un nombre minimal de segments média fournis au même lecteur 199.

De même, si le ou les utilisateurs arrêtent ultérieurement la lecture du contenu média, typiquement pendant une durée seuil (e.g., 5 minutes), alors le chargement en cours de l'étape 74 peut être arrêté, afin de ne pas utiliser inutilement la liaison de communication vers les CDN 110 et de ne pas occuper inutilement un espace mémoire en mémoire 1524.

A l'étape optionnelle 76, le serveur de cache 152 peut également déclencher (et donc arrête le cas échéant) le chargement, via la liaison de communication avec les CDN 110, des segments média manquants d'une autre qualité (que celle en cours de lecture) ou de plusieurs (voire toutes) autres qualités du même contenu média. Typiquement, le serveur de cache 152 peut tenter de récupérer les segments média de la piste HD ou 4K lorsqu'une lecture de piste SD est lancée, afin de proposer une meilleure qualité de visionnage à l'utilisateur.

La **Figure 4** illustre par exemple un utilisateur Ui qui lance la lecture du contenu média Vi, déclenchant le chargement, en mémoire 1524, des segments média manquants de la piste SD en cours de lecture mais également des segments média de la piste HD. Ainsi, le lecteur 199 peut, au bout d'un moment, basculer sur la piste HD.

La **Figure 3** illustre l'état de la mémoire après ou en cours de chargement de ces segments média manquants. Les segments média de la portion de début du contenu média ont été pré-cachés en mémoire cache 1522 permettant la lecture immédiate du début du contenu média par le lecteur 199. Puis les segments média non initialement pré-cachés des pistes SD et HD sont chargés progressivement en mémoire 1524.

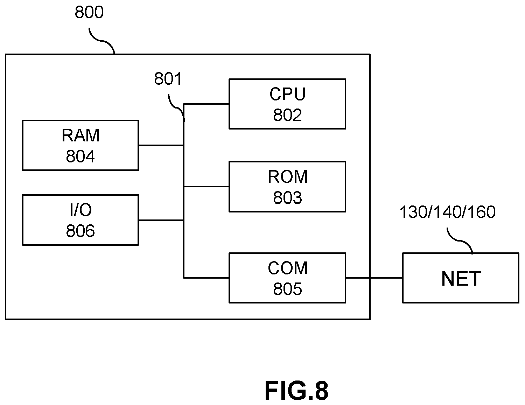

La **Figure 8** illustre une architecture matérielle pour tout équipement ou dispositif du système de streaming 100 de la **Figure 1****,** incluant les serveurs et les terminaux utilisateur.

Le dispositif 800 comprend un bus de communication 801 auquel sont préférablement connectés :
- une ou plusieurs unités centrales de traitement 802, telles qu'un ou des processeurs CPU et/ou un ou des processeurs ou cartes graphiques GPU et/ou un ou des microprocesseurs ;
- une mémoire de stockage 803, de type ROM et/ou disque dur et/ou mémoire flash, pour le stockage de programmes informatiques destinés à mettre en oeuvre tout ou partie des opérations décrites ci-dessus ;
- une mémoire vive 804, de type RAM voire vidéo RAM (VRAM), pour le stockage du code exécutable des programmes informatiques ainsi que les registres adaptés pour enregistrer des variables et des paramètres nécessaires à leur exécution ;
- une interface de communication 805 connectée à un réseau 130, 140 ou 160 afin de communiquer avec un ou plusieurs autres dispositifs du système de streaming 100 ; et
- une ou plusieurs entrées/sorties I/O 806 permettant à un utilisateur ou administrateur d'interagir avec les programmes informatiques, tant en configuration qu'en exploitation. Typiquement, les entrées/sorties peuvent inclure un écran servant d'interface graphique avec l'utilisateur et restituer des contenus vidéo, et/ou un haut-parleur pour restituer des contenus audio et/ou un clavier ou tout autre moyen de pointage permettant à l'utilisateur de sélectionner un contenu média dans un catalogue interactif, de lancer la lecture d'un contenu média sélectionné, mais également de définir en amont d'un voyage des intentions de visionnage de contenus média.

De préférence, le bus de communication 801 assure la communication et l'interopérabilité entre les différents éléments inclus dans le dispositif informatique 100 ou connectés à celui-ci. La représentation du bus n'est pas limitative et, en particulier, l'unité centrale est utilisable pour communiquer des instructions à tout élément du dispositif informatique 800 directement ou au moyen d'un autre élément du dispositif informatique.

Le code exécutable stocké en mémoire 803 peut être reçu au moyen du réseau de communication, via l'interface 805, afin d'y être stocké avant exécution. En variante, le code exécutable n'est pas stocké en mémoire non volatile 803 mais peut être chargé en mémoire volatile 804 depuis un serveur distant via le réseau de communication pour exécution directement. C'est le cas notamment des applications web (web apps).

L'unité centrale 802 est de préférence adaptée pour contrôler et diriger l'exécution des instructions ou des parties de code logiciel du ou des programmes informatiques. À la mise sous tension, le ou les programmes qui sont stockés en mémoire non volatile 803 ou sur le serveur distant sont transférés/chargés dans la mémoire vive 804, qui contient alors le code exécutable du ou des programmes, ainsi que des registres pour le stockage des variables et des paramètres nécessaires à la mise en oeuvre de l'invention.

Bien entendu, la présente invention ne se limite pas aux formes de réalisation décrites ci-avant à titre d'exemples ; elle s'étend à d'autres variantes. D'autres réalisations sont possibles.

Par exemple, dans un mode de réalisation, tout ou partie des fichiers manifest de piste des contenus média disponibles auprès des CDN 110 sont pré-chargés dans le serveur de cache 152. Cette disposition permet de fournir les fichiers manifest rapidement au lancement de la lecture d'un contenu média, et ainsi réduire le temps de latence, pour un coût de stockage faible (les fichiers manifest étant peu volumineux comparés aux données média).

S'il est principalement fait référence à des contenus média de type VOD, les explications qui précèdent s'appliquent également aux contenus « live » (en direct). Dans ce cas, un retard par rapport au direct est appliqué de manière à permettre le caching des segments « live » sur le serveur de cache embarqué 152 avant leur diffusion, et ainsi réduire le risque de coupure.

Par ailleurs, s'il est principalement fait référence à des environnements mobiles de type transport en commun pour lesquels la qualité de la liaison de communication avec les CDN externes est susceptible de varier, d'autres environnements collectifs non mobiles, tels un aéroport, une gare ou même une résidence particulière peuvent être concernés.

Par exemple, un décodeur ou un appareil de stockage réseau (NAS) officiant comme serveur de cache 152 peut être fourni à un utilisateur pour son domicile, décodeur / NAS sur lequel sont pre-cachés des portions de début de contenus média. Cela permet d'optimiser la lecture média en cas de connexion Internet faible (par exemple ADSL ou satellite).

## Revendications

1. Système (100) de streaming de contenus média, comprenant un environnement mobile (150) doté d'un serveur de cache (152) dans lequel sont pré-mises en mémoire cache (1522) des données de contenus média disponibles auprès d'un serveur de diffusion unicast de contenus (110) externe à l'environnement mobile, dans lequel le serveur de cache (152) est configuré pour pré-mettre en mémoire cache une portion de début seulement d'un ou plusieurs contenus média, la portion de début d'un contenu média étant formée des premiers segments média d'une pluralité de segments média fragmentant un même fichier média.

2. Système (100) selon la revendication 1, dans lequel un gestionnaire de pré-caching (153) est configuré pour obtenir des scores (S) associés à des contenus média respectifs et pour contrôler la pré-mise en mémoire cache d'une portion de début de chaque contenu média et dont une longueur est fonction du score associé.

3. Système (100) selon la revendication 2, dans lequel la longueur de la portion de début d'un contenu média pré-mise en mémoire cache correspond à un pourcentage dudit contenu média, déterminé en fonction du score associé.

4. Système (100) selon la revendication 2, dans lequel la longueur de la portion de début d'un contenu média pré-mise en mémoire cache correspond à une durée dudit contenu média, déterminée en fonction du score associé.

5. Système (100) selon l'une des revendications 2 à 4, dans lequel un contenu média est disponible dans une pluralité de qualités, et le gestionnaire de pré-caching (153) est configuré pour déterminer, en fonction du score associé au contenu média, une ou plusieurs desdites qualités pour lesquelles une portion de début est pré-mise en mémoire cache.

6. Système (100) selon la revendication 5, dans lequel une longueur de la portion de début d'une qualité pré-mise en mémoire cache est fonction du débit de la qualité et du score associé.

7. Système (100) selon l'une des revendications 2 à 6, dans lequel une longueur de la portion de début d'un contenu média pré-mise en mémoire cache est fonction d'au moins l'un parmi :
une estimation d'une bande passante disponible sur une liaison de communication entre l'environnement mobile et le serveur externe de diffusion unicast de contenus,
un espace de stockage disponible en mémoire cache, et
des utilisateurs (Ui) de l'environnement mobile entre deux sessions de synchronisation (G1, G2, G3) de la mémoire cache (1522) selon deux plans (P1, P2, P3) distincts de pré-mise en mémoire cache de contenus média.

8. Système (100) selon l'une des revendications 2 à 7, dans lequel les scores associés aux contenus média sont fonction d'au moins l'un parmi :
des utilisateurs (Ui) de l'environnement mobile entre deux sessions de synchronisation (G1, G2, G3) de la mémoire cache selon deux plans (P1, P2, P3) distincts de pré-mise en mémoire cache de contenus média, et
un horaire entre deux sessions de synchronisation de la mémoire cache selon deux plans distincts de pré-mise en mémoire cache de contenus média.

9. Système (100) selon l'une des revendications 1 à 8, dans lequel le serveur de cache (152) est configuré pour obtenir une liste ordonnée de segments média composant les portions de début selon des priorités attribuées aux segments média, et pour pré-mettre en mémoire cache les segments média par priorité décroissante.

10. Système (100) selon l'une des revendications 1 à 9, dans lequel le serveur de cache (152) est configuré pour pré-mettre en mémoire cache des portions de début d'une pluralité de contenus média par chargement progressif simultané de leurs portions de début.

11. Système (100) selon l'une des revendications 1 à 10, dans lequel le serveur de cache (152) est configuré pour pré-mettre en mémoire cache des portions de début d'une pluralité de contenus média en priorisant une portion de début d'une qualité faible d'un contenu média sur une portion de début d'une qualité élevée du même contenu média.

12. Système (100) selon l'une des revendications 1 à 10, dans lequel le serveur de cache (152) est configuré pour charger, via une liaison de communication entre l'environnement mobile et le serveur externe de diffusion unicast de contenus, des parties manquantes d'un contenu média, en réponse au lancement de la lecture du contenu média dans l'environnement mobile.

13. Système (100) selon la revendication 11, dans lequel les parties manquantes du contenu média incluent des segments média manquants d'une qualité en cours de lecture et des segments média d'au moins une autre qualité du même contenu média.

14. Procédé de streaming de contenus média dans un environnement mobile (150), comprenant une étape (58) de pré-mise en mémoire cache (1522), dans un serveur de cache (152) de l'environnement mobile, de données de contenus média disponibles auprès d'un serveur de diffusion unicast de contenus (110) externe à l'environnement mobile, procédé dans lequel la pré-mise en mémoire cache comprend la pré-mise en mémoire cache d'une portion de début seulement d'un ou plusieurs contenus média, la portion de début d'un contenu média étant formée des premiers segments média d'une pluralité de segments média fragmentant un même fichier média.

15. Support d'enregistrement non transitoire lisible par un ordinateur sur lequel est enregistré un programme pour la mise en œuvre du procédé selon la revendication 14, lorsque ce programme est exécuté par un processeur.
